# EUROPEAN PATENT APPLICATION

(11) **EP 1 990 660 A2**
(43) Date of publication of application: **12.11.2008**
(21) Application number: 08251640.2
(22) Date of filing: 08.05.2008
(51) Int. Cl.: G02B 5/02, G02B 5/22, G03B 21/62

(54) **Filter and plasma display apparatus including the same**

(30) Priority: 08.05.2007 KR 20070044715
(71) Applicant: Samsung SDI Co., Ltd., Suwon-si, Gyeonggi-do 442-390 (KR)
(72) Inventor: Hur, Sang-Yeol c/o Y.P. Lee, Mock & Partners, Seocho-Gu Seoul 137-875 (KR); Bae, Jae-Woo c/o Samsung SDI Co, Ltd, Gyeonggi-do (KR); Moon, Dong-Gun c/o Samsung SDI Co, Ltd, Gyeonggi-so (KR); Cha, Jun-Kyu c/o Samsung SDI Co, Ltd, Gyeonggi-do (KR)
(74) Representative: Round, Edward Mark

(57) **Abstract**

Provided are a filter which provides an excellent bright room contrast by reducing external light reflection and a display apparatus including the same. The filter can be easily manufactured at low cost. The filter is formed in a single sheet and includes a base film; a plurality of beads disposed on a front surface of the base film and formed of a visible light-transmitting material; and a colored binder layer fixing the beads to the base film.

## Description

### BACKGROUND OF THE INVENTION

### 1. Field of the Invention

The present invention relates to a filter and a display apparatus including the same, and more particularly, to a filter which provides an excellent bright room contrast by reducing external light reflection and improves transmissivity of generated visible light that propagates in a forward direction from the front of a display apparatus including the filter, and a display apparatus including the same.

### 2. Description of the Related Art

A plasma display apparatus using a plasma display panel is a flat display device which displays images using a gas discharge principle, and has excellent display capability in terms of brightness, contrast, after image, and viewing angle, compared to a conventional cathode-ray tube (CRT). In addition, plasma display apparatuses can be made in thin films with large sizes. Due to these advantages, plasma display apparatuses are regarded as a next-generation large-size flat display apparatus.

Meanwhile, in a conventional plasma display apparatus, a tempered glass filter is disposed on a front surface of a front substrate of a plasma display panel. Use of the tempered glass filter results in formation of double images and a substantial decrease in the bright room contrast due to external light reflection. In addition, the tempered glass filter is heavy and its manufacturing costs are high. Accordingly, there is a need to solve these problems.

### SUMMARY OF THE INVENTION

The present invention sets out to provide a filter which provides an excellent lightroom contrast by reducing external light reflection, and a display apparatus including the same.

The present invention also sets out to provide a filter which can be easily manufactured at low cost, and a display apparatus including the same.

According to an aspect of the present invention, there is provided a filter formed in a single sheet including: a base film; a plurality of beads disposed on a front surface of the base film and formed of a visible light-transmitting material; and a colored binder layer fixing the beads to the base film.

The transmissivity of visible light that propagates in a forward direction from the filter may be higher than the transmissivity of the visible light propagating in a rear direction of the filter.

The thickness of the colored binder layer may be greater than a half of an average diameter of the beads and smaller than the average diameter.

The beads may have substantially same diameters or the aberration of diameters with respect to the average diameter may be within 10% or less.

The average diameter of the beads may be in the range of 0.1*µ*m to 100*µ*m.

The base film may include one compound selected from the group consisting of polyethersulphone, polyacrylate, polyetherimide, polyethyelenen napthalate, polyethyeleneterepthalate, polyphenylene sulfide, polyallylate, polyimide, polycarbonate, cellulose tri acetate, and cellulose acetate propinonate.

The filter may further include an adhesive layer disposed on a rear surface of the base film to fix the filter to a front surface of a display apparatus.

According to another aspect of the present invention, there is provided a plasma display apparatus including: a plasma display panel which displays an image through gas discharge; a circuit substrate operating the plasma display panel; a chassis supporting the plasma display panel and the circuit substrate; and the filter bonding to a front surface of the plasma display panel.

The plasma display apparatus may further include an adhesive layer disposed on a rear surface of the base film to fix the filter to a front surface of the plasma display apparatus.

The adhesive layer may include one compound selected from the group consisting of an acryl-based resin, a polyester resin, an epoxy resin, an urethane resin, and pressure sensitive adhesive (PSA).

The adhesive layer may include dyes or pigment to correct color, block neon light, or block near infrared.

### BRIEF DESCRIPTION OF THE DRAWINGS

The above and other features and advantages of the present invention will become more apparent by making reference to embodiments thereof which are described below with reference to the attached drawings in which:

FIG. 1 is a schematic sectional view of a filter according to an embodiment of the present invention;

FIG. 2 is a graph of front-surface transmissivity and rear-surface transmissivity of the filter of FIG. 1;

FIG. 3 is a drawing illustrating pathways of reflected external light and internal light propagating in a forward direction from the front of a display apparatus when the filter of FIG. 1 is disposed at the front surface of the display, apparatus;

FIG. 4 is an exploded perspective view of a plasma display apparatus including the filter of FIG. 1; and

FIG. 5 is a cross-sectional view of the plasma display apparatus of FIG. 4, taken along line V-V.

### DETAILED DESCRIPTION OF THE INVENTION

The present invention will now be described more fully with reference to the accompanying drawings, in which embodiments of the invention are shown.

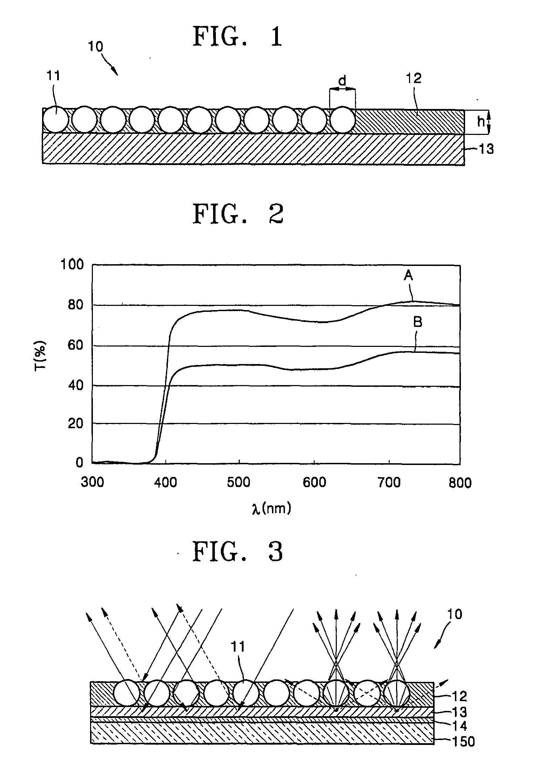

FIG. 1 is a sectional view of part of a filter 10 according to an embodiment of the present invention.

As illustrated in FIG. 1, the filter 10 includes beads 11, a colored binder layer 12, and a base film 13.

The beads 11 are spherical or oval and formed of a material that has high transmissivity with respect to visible light.

The average diameter of the beads 11 is in the range of 1 µm to 100µm A plurality of beads 11 are arranged on and bound to the base film 13. The beads 11 are substantially uniformly distributed on the base film 13.

The colored binder layer 12, which has a color having low brightness, binds the beads 11 to the base film 13, and absorbs visible light to prevent reflection of the visible light. More specifically, visible light is blocked by reflecting visible light to the outside at the exposed surface of the colored binder layer 12 or absorbing visible light by the colored binder layer 12; and visible light is actively reflected at the interface between the colored binder layer 12 and the beads 11. The colored binder layer 12 is formed of a colored acryl-based resin. More specifically, the colored binder layer 12 is formed by fixing the base film 13 and the beads 11 together with the colored acryl-based resin in a liquid state, and then solidifying the colored acryl-based resin liquid. The color of the colored binder layer 12 may be, but is not limited to, black, marine blue, or brown.

The average diameter (d) of the beads 11 may be about the same as or greater than the thickness (h) of the binder layer 12, but no greater than about twice the thickness (h) of the binder layer 12. In other words, the thickness of the binder layer 12 is from about one half of the average diameter of the beads 11 to about an average diameter of the beads 11. The average diameter of the beads 11 may be in the range of about 0.1µm to 100µm. The beads 11 may be spherical so that the diameters of the beads 11 may be substantially the same. Alternatively, the beads 11 may be oval so that the longer diameters of the beads 11 may be substantially the same and the shorter diameters of the beads 11 may be substantially the same. The aberration or variance of diameters of the beads with respect to the average diameter may be about 10% or less.

The colored binder layer 12 may include dyes or pigment to control the color and transmissivity of the visible light entering from a display apparatus.

The base film 13 is formed of a material through which visible light can propagate. The filter 10 is directly bonded to a front surface of the display apparatus using the base film 13. The base film 13 is formed of any transparent material that is easily, tightly attached to glass or plastic in view of interface characteristics. In addition, the base film 13 can be formed of a flexible material to simplify an attaching process and make transportation easy.

The base film 13 may be formed of polyethersulphone (PES), polyacrylate (PAR), polyetherimide (PEI), polyethyelenen napthalate (PEN), polyethyeleneterepthalate (PET), polyphenylene sulfide (PPS), polyallylate, polyimide, polycarbonate (PC), cellulose tri acetate (TAC), cellulose acetate propinonate (CAP), or the like. For example, the base film 13 is formed of PC, PET, TAC, or PEN.

The base film 13 can be colored with a predetermined color. Accordingly, transmissivity of visible light with respect to the filter 10 can be adjusted by controlling the coloring conditions for the base film 13. For example, when the base film 13 has a dark color, transmissivity of visible light may decrease. In addition, the color of visible light which propagates in a forward direction from the front of a display apparatus including the filter 10 can be controlled. That is, the base film 13 can be colored with a color that is visually pleasing to users, or colored to improve color purity of the display apparatus including the filter 10. Furthermore, the base film 13 has color patterns corresponding to respective sub pixels of a plasma display panel to which the filter 10 is applied. However, it will be appreciated that the base film 13 may be colored in various ways for a variety of color correction purposes.

The base film 13 is a flexible panel, and has a thickness of 50µm to 500µm preferably 100µmto 300µm When the base film 13 is thin, the effects of preventing the scattering of pieces generated when the panel is destroyed may be decreased. On the other hand, when the base film 13 is thick, the efficiency of the laminating process may be decreased.

The filter 10 is directly bonded to a front surface of a display panel by an adhesive layer 14. The adhesive layer 14 is disposed on a rear surface of the base film 13. To decrease a double image phenomenon, the difference in refraction rates of the adhesive layer 14 and a material that forms a front surface of the display apparatus may be adjusted to a predetermined value, such as 1.0% or less.

The adhesive layer 14 may include a thermoplastic or UV thermosetting resin. For example, the adhesive layer 14 may include one compound selected from an acryl-based resin, a polyester resin, an epoxy resin, a urethane resin, and pressure sensitive adhesive (PSA). The adhesive layer 14 can be formed by dip coating, air knife coating, roller coating, wire bar coating, or gravure coating.

The adhesive layer 14 may further include a compound that absorbs near infrared light, such as a copper atom-containing resin, a copper compound or phosphor compound-containing resin, a copper compound or THIO derivative-containing resin, a tungsten-based compound-containing resin, or a cyanine-based compound-containing resin.

The adhesive layer 14 may further include a coloring agent, such as a dye or pigment, to block neon light for color correction. The coloring agent selectively absorbs light of the visible light region that has a wavelength of 380 nm to 770 nm (or 400 -700 nm). In particular, when the plasma display panel is discharged, a neon gas acting as a discharge gas generates unnecessary visible light with a wavelength of about 585 nm. As a result, a cyanine-based, squarylium-based, azomethine-based, xanthene-based, oxonol-based, or azo-based compound is used to absorb the unnecessary visible light. These coloring agents are included in the adhesive layer 14 in a dispersed micro particle form.

The filter 10 is formed in a single sheet so that it can be easily used in a display apparatus.

FIG. 2 is a graph illustrating the performance of a filter according to an embodiment of the present invention. In FIG. 2, the Y axis represents transmissivity (T)(unit: %), and the X axis represents wavelength (λ) (unit: nm.)

Referring to FIG. 2, Line A shows transmissivity of visible light propagating from a base film formed of PET to a layer that consists of beads and a colored binder layer; and Line B shows transmissivity of visible light propagating from the layer that consists of beads and a colored binder layer to the base film formed of PET. In a wavelength band of 380 nm to 770 nm of visible light, the average transmissivity when visible light propagates from the base film formed of PET to the layer that consists of beads and a colored binder layer is about 23 to 24% higher than the average transmissivity when visible light propagates from the layer that consists of beads and a colored binder layer to the base film formed of PE. When the beads or the colored binder layer includes a coloring agent or a transmissivity controlling film, transmissivity itself can be changed but the difference of the average transmissivity at front and rear surfaces of the filter 10 remains constant. The transmissivity can be adjusted by changing the size of beads.

The transmissivity of the filter 10 can be adjusted according to the particle size of the beads 11 and the amount of the coloring agent included in the colored binder layer 12. In the filter 10, the transmissivity of visible light that propagates in a forward direction from the filter may be higher than the transmissivity of the visible light propagating in a rear direction of the filter. Specifically, the difference in transmissivity of visible light propagating in the front and rear directions may be maintained to 10% or more.

FIG. 3 is a drawing illustrating pathways of reflected external light and internal light propagating in a forward direction from the front of a display apparatus when the filter of FIG. 1 is disposed at the front surface of the display apparatus.

As illustrated in the left side of FIG. 3, external light is partly absorbed and partly reflected by the colored binder layer 12, so that the amount of light propagating in a rear direction of the filter 10 decreases. In addition, external visible light entering the bead 11 is partly reflected at a front surface of a display apparatus, and the reflected light enters a rear portion of the colored binder layer 12 and is then adsorbed, so that the amount of light reflected toward the outside is decreased. As a result, the amount of external light reflected at the front surface of the display apparatus can be significantly decreased.

As illustrated in the right side of FIG. 3, visible light generated in the display apparatus, that is, light that propagates straight or light that is diffused is reflected at the interface between the beads 11 and the colored binder layer 12 and then propagates in a forward direction from the front of the filter 10. However, light that is diffused, i.e., light other than the light that propagates straight, in the forward direction from the front of the display apparatus at large angles is mostly absorbed by the colored binder layer 12, and thus, the amount of the transmitted light is partly decreased.

Therefore, by using the filter 10, transmissivity of internal light is slightly decreased but the transmissivity and reflection of external light is substantially decreased, and thus the lightroom contrast is improved.

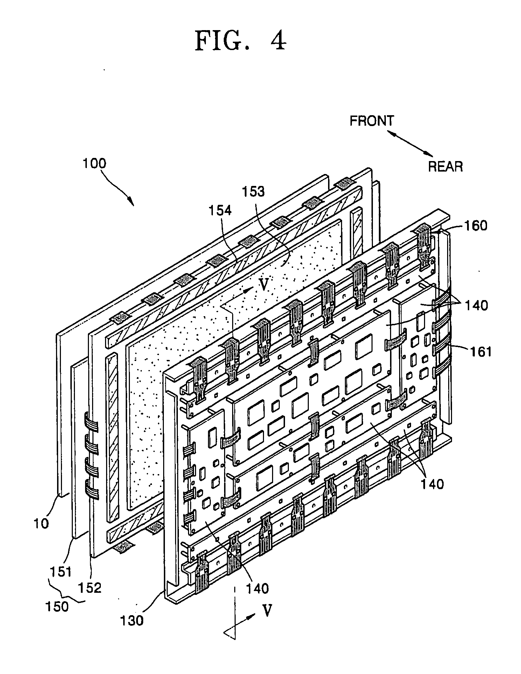

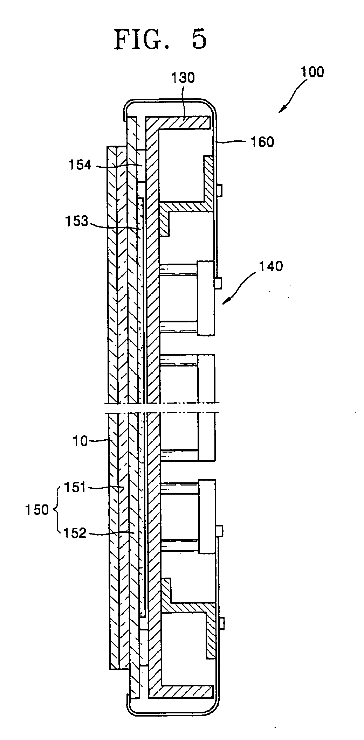

FIG. 4 is a perspective view of a plasma display apparatus 100 including a filter according to an embodiment of the present invention, and FIG. 5 is a cross-sectional view of the plasma display apparatus of FIG. 4, taken along the line V-V.

The plasma display apparatus 100 includes a plasma display panel 150, a chassis 130, and a circuit unit 140. The filter 10 is bound to a front surface of the plasma display panel 150. The plasma display panel 150 can be bonded to the chassis 130 through an adhesive, such as a double-side tape 154. A thermally conductive member 153 is interposed between the chassis 130 and the plasma display panel 150 to dissipate heat, which is generated when the plasma display panel 150 operates, through the chassis 130.

The plasma display panel 150 displays an image through gas discharge, and includes a front panel 151 and a rear panel 152 combined together. The filter 10 can be bound to the front surface of the plasma display panel 150 by an adhesive layer (not shown.)

The plasma display panel including the filter 10 has an improved bright room contrast. In addition, brightness and color can be controlled by adding a coloring agent to a bead and a colored binder layer or by controlling the amount of the coloring agent added. Furthermore, formation of double images can be prevented by directly binding the filter 10 to a front surface of the plasma display panel 150. The filter 10 is formed in a single sheet, so that it is more lightweight than a conventional tempered glass filter and its manufacturing costs are low.

The chassis 130 is disposed at a rear side of the plasma display panel 150 to structurally support the plasma display panel 150. The chassis 130 may be formed of a metal having excellent rigidity, such as aluminum or iron, or plastic.

A thermally conductive member 153 is interposed between the plasma display panel 150 and the chassis 130. The thermally conductive member 153 is surrounded by a plurality of double-sided tapes 154 which fix the plasma display panel 150 and the chassis 130 together.

A circuit unit 140 is disposed on a rear side of the chassis 130, and circuits which operate the plasma display panel 150 are arranged on the circuit unit 140. The circuit unit 140 carries an electrical signal to the plasma display panel 150 by signal carrying means. The signal carrying means can be a flexible printed cable (FPC), a tape carrier package (TCP), a chip on film (COF), or the like. In the current embodiment, FPCs 161 used as the signal carrying means are disposed at left and right sides of the chassis 130, and TCPs 160 used as the signal carrying means are disposed at upper and lower sides of the chassis 130.

Meanwhile, although in the current embodiment, an apparatus including a filter according to an embodiment of the present invention is limited to the plasma display apparatus, the filter can be attached to front surfaces of various display apparatuses.

In a filter according to the present invention and a plasma display apparatus including the same, bright room contrast can be substantially improved because of high absorption and reflection blocking effects of external light. In addition, the brightness and color can be controlled by adjusting a coloring agent added to a bead and a colored binder layer. Furthermore, the filer can be easily manufactured at low cost.

While the present invention has been particularly shown and described with reference to embodiments thereof, it will be understood by those of ordinary skill in the art that various changes in form and details may be made therein without departing from the scope of the present invention as defined by the following claims.

## Claims

1. A filter formed in a single sheet comprising:
a base film;
a plurality of beads disposed on a front surface of the base film and formed of a visible light-transmitting material; and
a colored binder layer fixing the beads to the base film.

2. A filter according to claim 1, wherein the transmissivity of visible light that propagates in a forward direction from the filter is higher than the transmissivity of the visible light propagating in a rear direction of the filter.

3. A filter according to claim 1 or 2, wherein the thickness of the colored binder layer is greater than half of an average diameter of the beads and smaller than the average diameter.

4. A filter according to any preceding claim, wherein the beads have substantially the same diameters or the aberration of diameters with respect to the average diameter is within 10% or less.

5. A filter according to any preceding , wherein the average diameter of the beads is in the range of 0.1 µmto 100µm

6. A filter according to any preceding claim, wherein the base film comprises one compound selected from the group consisting of polyethersulphone, polyacrylate, polyetherimide, polyethyelenen napthalate, polyethyeleneterepthalate, polyphenylene sulfide, polyallylate, polyimide, polycarbonate, cellulose tri acetate, and cellulose acetate propinonate.

7. A filter according to any preceding claim, further comprising an adhesive layer disposed on a rear surface of the base film to fix the filter to a front surface of a display apparatus.

8. A plasma display apparatus comprising:
a plasma display panel which displays an image through gas discharge;
a circuit substrate operating the plasma display panel;
a chassis supporting the plasma display panel and the circuit substrate; and
a filter according to any preceding claim, wherein the filter is bonded to a front surface of the plasma display panel.

9. A plasma display apparatus according to claim 8, further comprising an adhesive layer disposed on a rear surface of the base film to fix the filter to a front surface of the plasma display apparatus.

10. A plasma display apparatus according to claim 9, wherein the adhesive layer comprises one compound selected from the group consisting of an acryl-based resin, a polyester resin, an epoxy resin, an urethane resin, and pressure sensitive adhesive (PSA).

11. A plasma display apparatus according to claim 9 or 10, wherein the adhesive layer comprises dyes or pigment to correct color, block neon light, or block near infrared.
